# EUROPÄISCHE PATENTSCHRIFT

(11) **EP 0 599 178 B1**
(45) Veröffentlichungstag und Bekanntmachung des Hinweises auf die Patenterteilung: **26.03.1997**
(21) Anmeldenummer: 93118472.5
(22) Anmeldetag: 16.11.1993
(51) Int. Cl.: F16B 7/04

(54) **Verbindungselement**
Connecting element
Elément de connexion

(30) Priorität: 21.11.1992 DE 4239199; 11.08.1993 DE 4326925; 11.08.1993 DE 9311973 U
(43) Veröffentlichungstag der Anmeldung: 01.06.1994
(73) Patentinhaber: HESTEX SYSTEMS B.V., NL-7332 BE Apeldoorn (NL)
(72) Erfinder: Offenbroich, Adrian, D-40215 Düsseldorf (DE)
(74) Vertreter: Stenger, Watzke & Ring Patentanwälte

(56) Entgegenhaltungen:
- EP-A- 0 166 794
- EP-A- 0 238 848
- DE-A- 3 821 625
- DE-C- 3 607 849
- DE-U- 9 106 365

## Beschreibung

Die Erfindung betrifft ein Verbindungselement zum lösbaren Verbinden zweier Profilstücke, von denen wenigstens eines eine hinterschnittene Längsnut und das andere ein rechteckiges Hohlprofil aufweist, in das ein Lagerglied zum Führen eines aus wenigstens einem Blattfederelement geformten Haltegliedes eingesetzt ist, wobei das Halteglied über einen in das Lagerglied eingesetzten und von außen durch eine Öffnung in dem zugehörigen Profilstück drehbaren Exzenter in dem Hohlprofil längsverschiebbar ist, wodurch die Profilstücke über aus dem Hohlprofil herausragende und in die Längsnut des anderen Profilstückes eingreifende freie Enden des Haltegliedes miteinander verbunden bzw. voneinander gelöst werden können, wobei das Lagerglied als das Halteglied umschließendes Gehäuse ausgebildet ist. (DE-U 9 106 365).

Derartige Verbindungselemente, auch Klemmschlösser genannt, sind im Stand der Technik bekannt. Sie werden verwendet zur Herstellung von aus Profilstangen bestehenden Gestellen, wobei das Verbindungselement in ein im wesentlichen rechteckiges Hohlprofil einer Profilstange derart eingesetzt wird, daß das Halteglied am freien Ende der Profilstange herausragt. In eine hinterschnittene Längsnut einer anderen Profilstange ist das Halteglied einsetzbar. Das Halteglied besteht aus einer Blattfeder, welche in dem als Gehäuse ausgebildeten Lagerglied längsverschieblich ist. Zu diesem Zwecke ist in das Lagerglied ein das Halteglied durchragender Exzenter eingesetzt. Dieser Exzenter ist durch eine Öffnung in der entsprechenden Profilstange zugänglich. Durch Drehen des Exzenters kann das Halteglied in dessen Längsrichtung verschoben werden. Nach Einsetzen des aus dem freien Ende der einen Profilstange herausragenden Haltegliedes in die hinterschnittene Längsnut einer anderen Profilstange wird der Exzenter verdreht, so daß das Halteglied in das Lagerglied hineingezogen wird. In aller Regel weisen die Halteglieder gegensinnige Haken bildende Schenkelenden auf, welche bei Verschieben des Haltegliedes mittels Exzenterdrehung in das Lagerglied hinein auseinandergespreizt werden. Dieses Auseinanderspreizen der Schenkelenden bewirkt die Verklemmung des Haltegliedes in der Längsnut der Profilstange. Somit wird ein sicherer Halt zwischen den einzelnen Profilstangen bewirkt.

Bei den gattungsgemäßen Verbindungselementen müssen also Halteglied, das das Lagerglied bildende Gehäuse und der Exzenter derart relativ zueinander montiert werden, daß zum einen der Exzenter von außen zur Durchführung einer Drehung zugänglich ist, so daß das Halteglied durch die Drehung des Exzenters in Längsrichtung im Gehäuse hin- und herbewegt werden kann, andererseits muß die Anordnung der Teile dauerhaft sein, so daß eine unerwünschte Zerlegung des Verbindungselementes oder Bewegungen der Teile relativ zueinander im Betrieb ausgeschlossen sind. Da es sich jedoch um Massenartikel handelt und die Kosten für die Verbindungselemente die Herstellkosten für die aus den Profilstangen und den Verbindungselementen gebildeten Gestelle nicht negativ beeinflussen dürfen, müssen die zur Herstellung des Verbindungselementes benötigten Einzelteile jedes für sich wirtschaftlich herstellbar und darüber hinaus auch die Montage des Verbindungselementes einfach und wirtschaftlich sein.

Darüber hinaus ist es erforderlich, daß der Exzenter nicht endlos durchgedreht werden kann. Zum einen wird eine Drehendposition benötigt, in welcher das Halteglied sich in seiner am weitestens vorgeschobenen Position befindet, in welcher die Schenkelenden in die Nuten der Profilstangen einsetzbar sind, zum anderen wird die exakte Einzugsposition benötigt, in welcher das Halteglied in der eingezogenen Position liegt, in welcher die Schenkelenden gegen die Nuten der Profilstange verklemmt sind. Wenn diese beiden Positionen nicht exakt definiert sind, ist ein wunschgemäßer Einsatz des Verbindungselementes nicht möglich und ein sicherer Halt des Gestells nicht gewährleistet.

Bei den aus dem Stand der Technik bekannten Verbindungselementen wird als Anschlag eine der Gehäuseseitenwände verwendet, gegen welche eine große Exzenterscheibe mit ihrem radial äußeren Ende bei der Drehung anstößt. Die jeweils gegenüberliegende Gehäuseseitenwand des Lagergliedes weist einen Schlitz auf, so daß der Exzenter nicht auch gegen diese Wand anstößt. Derartige Verbindungselemente sind beispielsweise bekannt aus der DE-OS 29 41 008, dem DE-GM 91 13 128, der DE-OS 39 31 943 und der EP 0 371 153.

Es liegt auf der Hand, daß ein Exzenter, welcher eine Exzenterscheibe aufweist, die bei Drehung gegen eine der im Radialbereich liegenden Seitenwände anstößt, schwierig in dem das Lagerglied bildenden Gehäuse montierbar ist, insbesondere, weil ein exaktes Zusammenwirken mit dem ebenfalls einzusetzenden Halteglied gewährleistet sein muß. Die genannten DE-OS 29 41 008 und DE-GM 91 13 128 offenbaren zu diesem Zweck einen zweiteiligen Exzenter, bei welchem ein Mittelglied in das Gehäuse quer eingeschoben und durch eine Öffnung in einer der Seitenwände eine Achse axial eingesteckt wird. Bei der DE-OS 39 31 943 weist das Gehäuse eine seitliche Öffnung auf, welche zum einen dem Einsetzen des Exzenters dient und zum anderen verhindert, daß die Exzenterscheibe an dieser Seitenwand anschlägt. Die entsprechend gegenüberliegende Seitenwand ist dann die Anschlagswand. Bei dem aus der EP 0 371 153 bekannten Verbindungselement wird demgegenüber der Exzenter in das Gehäuse eingesetzt, bevor dieses durch einen Deckel verschlossen wird.

Alle genannten Ausführungsarten sind hinsichtlich Aufbau und Montage des Verbindungselementes kompliziert, aufwendig und vergleichweise unwirtschaftlich. In allen vorbekannten Fällen muß das Gehäuse unsymmetrische Ausbrüche oder Ausnehmungen aufweisen, was eine automatische Herstellung erschwert. Der Exzenter weist in allen Fällen einen komplizierten Aufbau auf, der insbesondere beim zweiteiligen Exzenter sehr aufwendig in der Herstellung und in der Montage ist. Bei zweiteiligen Exzentern ist die Montage in mehreren Richtungen durchzuführen, d.h. der Exzenter seitlich einzuschieben und die Achse axial von oben einzustecken, im Falle der EP 0 371 153 muß das Gehäuse nach Einsetzen des Exzenters montiert werden.

Davon ausgehend liegt der Erfindung die **Aufgabe** zugrunde, ein Verbindungselement der gattungsgemäßen Art derart weiterzubilden, daß die Einzelteile einen einfachen Aufbau aufweisen, die Herstellung und Montage der Teile erheblich vereinfacht und weitestgehend automatisierbar sind, und das Verbindungselement erheblich kostengünstiger herstellbar ist.

Als technische **Lösung** dieser Aufgabe wird ein gattungsgemäßes Verbindungselement durch die Merkmale des Kennzeichnenden Teils des Anspruchs 1 weitergebildet.

Das erfindungsgemäße Verbindungselement ist somit aus Teilen aufgebaut, die jeweils einen sehr einfachen Aufbau aufweisen und somit die Herstellung der Teile weitestgehend automatisierbar ist. Das Gehäuse weist neben dem inneren Hohlraum zum Aufnahmen und Verschieben des Haltegliedes lediglich eine Bohrung in einer Seitenwand auf. Das Halteglied in Form einer Blattfeder weist ebenfalls nur eine entsprechende Bohrung für den Exzenter auf. Der Exzenter weist wenigstens in seinem unteren Bereich einen ringförmigen Vorsprung auf, der durch einen Abschnitt gebildet ist, dessen Durchmesser gegenüber dem axial davorliegenden Abschnitt vergrößert ist. Die Bohrungen im Gehäuse und im Halteglied sind derart angeordnet, daß sie in der Funktionsstellung zueinander versetzt, also exzentrisch liegen. Zum Einsetzen des Exzenters werden die beiden Bohrungen koaxial zueinander ausgerichtet und der Exzenter von außen durch die Öffnung im Gehäuse eingesetzt. Der Abschnitt mit vergrößertem Durchmesser wird auch durch das Halteglied hindurchgesteckt. Halteglied und Gehäuse bewegen sich dannach wieder in Funktionsstellung, wobei die beiden Bohrungen zueinander versetzt zum liegen kommen. Der Exzenter ist somit mit der durch den Abschnitt mit vergrößertem Durchmesser gebildeten unteren Stufe durch die querverschobene Bohrung des Halteglieds am Herausfallen aus dem Gehäuse gehindert.

Es ist offensichtlich, daß durch diese einfachen Maßnahmen der Aufbau der Einzelteile und des Verbindungsschlosses insgesamt sowie seine Montage erheblich vereinfacht sind.

Mit Vorteil wird gemäß einer weiteren Ausgestaltung der Erfindung angegeben, daß der Exzenter aus zwei koaxial mit Abstand voneinander angeordneten Scheiben besteht, die über einen exzentrisch angeordneten, zylindrischen Teil miteinander verbunden sind. Zwischen dem exzentrisch angeordneten, zylindrischen Teil und der in Einsatzstellung unteren Scheibe wird der erforderliche Durchmessersprung denkbar einfach erzielt, so daß ein derart gebildeter Exzenter weitestgehend automatisch und kostengünstig hergestellt werden kann.

Mit Vorteil wird weiterhin angegeben, daß der Exzenter federbelastet durch eine in Axialrichtung wirkende Feder in das Verbindungselement eingesetzt ist. Durch diese Vorspannung wird der Exzenter immer in Richtung der Öffnung im Gehäuse gedrückt, wodurch automatisch der durch die untere Scheibe gebildete Durchmessersprung gegen die Wandung der Bohrung im Halteglied gedrückt wird. Damit wird die Verbindung der Elemente im Verbindungselement zueinander sicherer und der Exzenter am Herausfallen aus dem Gehäuse gehindert.

Mit Vorteil wird weiterhin angegeben, daß das Halteglied durch die Kraft einer Druckfeder in Ausschubrichtung aus dem Gehäuse vorgespannt ist. Damit liegt die Außenwandung der Bohrung im Halteglied, dem die Bohrung durchragenden Teil des Exzenters unter Federspannung, an, wodurch die Halterung des Exzenters im Verbindungselement noch verbessert wird.

In vorteilhafter Weise wird angegeben, daß das zusätzliche am Exzenter angeordnete Drehbegrenzungselement ein Nocken ist, welcher mit einem im Gehäuse angeordneten Anschlagelement zusammenwirkt. In vorteilhafter Weise ist der Nocken in axialer Richtung am unteren Ende des Exzenters angeordnet, während das gehäuseseitige Anschlagelement auf der Innenseite der Seitenwand angeordnet ist, die der die Bohrung tragenden Seitenwand gegenüberliegt. Dieser in Axialrichtung angeordnete exzenterseitige Nocken kann in sehr einfacher Weise hergestellt werden. Ebenso kann das gehäuseseitige Anschlagelement durch einfaches Einsetzen beispielsweise eines zylindrischen Stiftes in eine kleine Bohrung hergestellt werden.

Das Halteglied kann aus einer einteiligen, gefalteten Blattfeder oder aus mehreren zusammengesetzten Blattfederelementen bestehen.

Bei einer praktischen Ausführungsform sind die freien Enden der Blattfeder oder -teile im Grundriß T-förmig ausgebildet und über die Breite des Gehäuses verlängert, um die Anlagefläche an den Profilstangen zu vergrößern und damit die spezifische Flächenpressung im verspannten Zustand zu verringern. Die freien Enden der Blattfeder weisen einen solchen Abstand voneinander auf, daß am vorderen Ende des Gehäuses angeformte Distanzhalter im verspannten Zustand zwischen den freien Enden Aufnahme finden. Im verspannten Zustand verhindern die Distanzhalter ein Zusammendrücken der freien Enden der Blattfeder bzw. -teile.

Die freien Enden der als Halteglied ausgebildeten Blattfeder oder -teile weisen auf den Außenseiten querverlaufende, wulstartige Ausformungen auf, die die Hinterschneidungen der Längsnut hintergreifen. Um diesen Hintergriff zu verstärken, sind die der Blattfeder zugewandten Seiten der wulstartigen Ausformungen als senkrechte Anlageflächen ausgebildet.

Eine so ausgebildete Klemmverbindung hat den Vorteil, daß die in Querrichtung federnden mit Abstand parallel zueinander angeordneten freien Enden der Blattfeder aufgrund ihrer Federkraft auch im unverspannten Zustand einen Zusammenhalt der zu verbindenden Profilstücke bewirken. Auf diese Weise wird das Zusammenfügen mehrerer Profilstücke erleichtert, da bereits eine lockere Verbindung zwischen den Profilstücken besteht, aber trotzdem die Profilstücke noch gegeneinander verschoben werden können.

Das erfindungsgemäße Verbindungselement zeichnet sich dadurch aus, daß die zu dessen Aufbau verwendeten Einzelteile denkbar einfach aufgebaut und montierbar sind. Damit ist eine weitestgehende Automatisation bei der Herstellung der Einzelteile und des Verbindungselementes möglich.

Weitere Vorteile und Merkmale der Erfindung ergeben sich aus der nachfolgenden Beschreibung anhand der Figuren. Diese zeigen:
- Fig. 1: ein Verbindungselement in Draufsicht;
- Fig. 2: dasselbe Verbindungselement entlang der Linie II-II in Fig. 1 geschnitten in Seitenansicht;
- Fig. 3: eine Explosionszeichnung der Bauteile eines Verbindungselementes mit einem zugehörigen Profilstück in perspektivischer Ansicht;
- Fig. 4: einen Exzenter in Seitenansicht;
- Fig. 5: denselben Exzenter in Unteransicht;
- Fig. 6: ein Gehäuse in Seitenansicht;
- Fig. 7: dasselbe Gehäuse entlang der Linie VII-VII in Fig. 6 geschnitten in Draufsicht;
- Fig. 8: dasselbe Gehäuse in Vorderansicht;
- Fig. 9: einen Bewegungsplan des Exzenters;

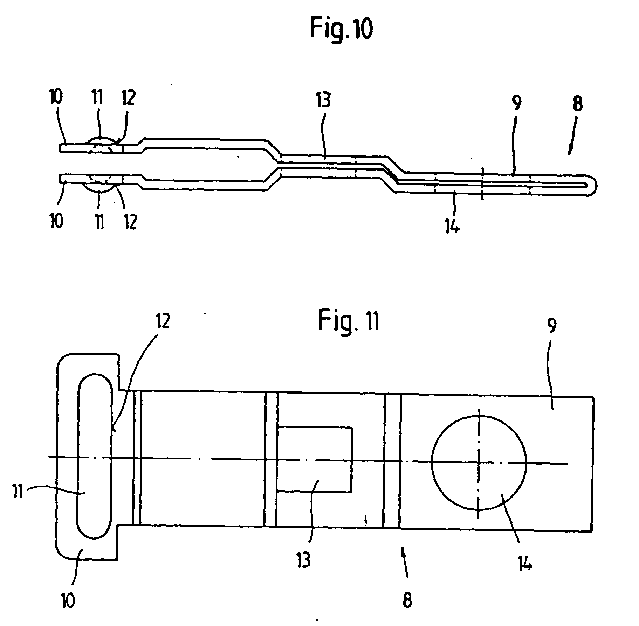

- Fig. 10: eine Blattfeder in Draufsicht;
- Fig. 11: dieselbe Blattfeder in Seitenansicht.

In einem ersten Profilstück 1 ist eine hinterschnittene Längsnut 2 angeordnet, die von Lippen 3 begrenzt wird. Mit dem Profilstück 1 ist ein zweites Profilstück 4 verbunden, welches ein Hohlprofil 5 aufweist.

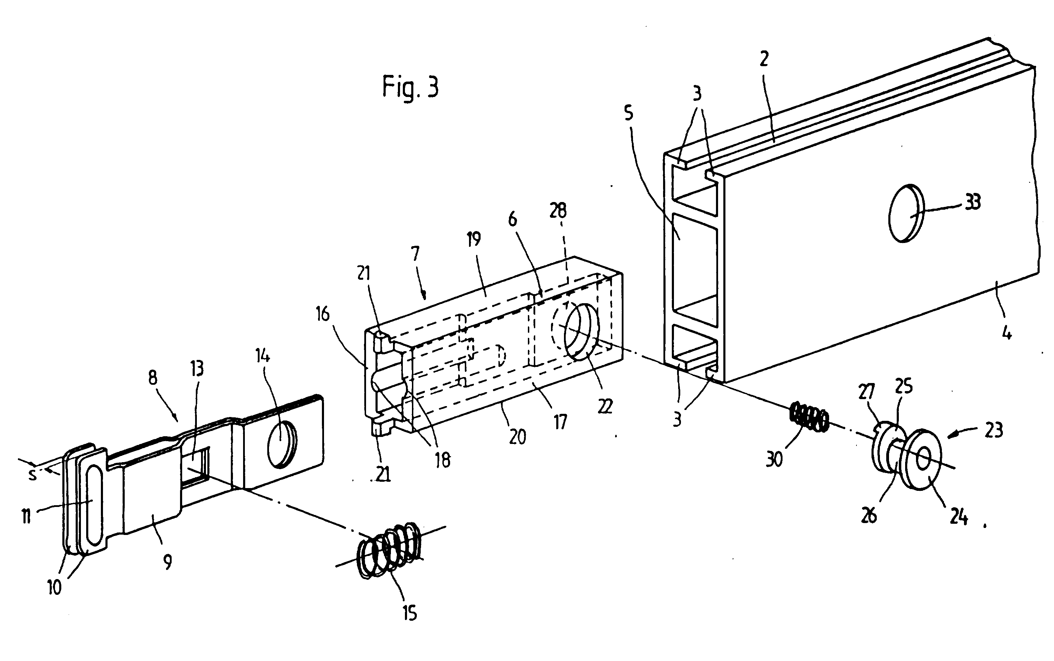

Wie aus Fig. 3 ersichtlich, stecken in dem Hohlprofil 5 ein als Gehäuse 6 ausgebildetes Lagerglied 7 sowie ein in das Gehäuse 6 eingeschobenes Halteglied 8.

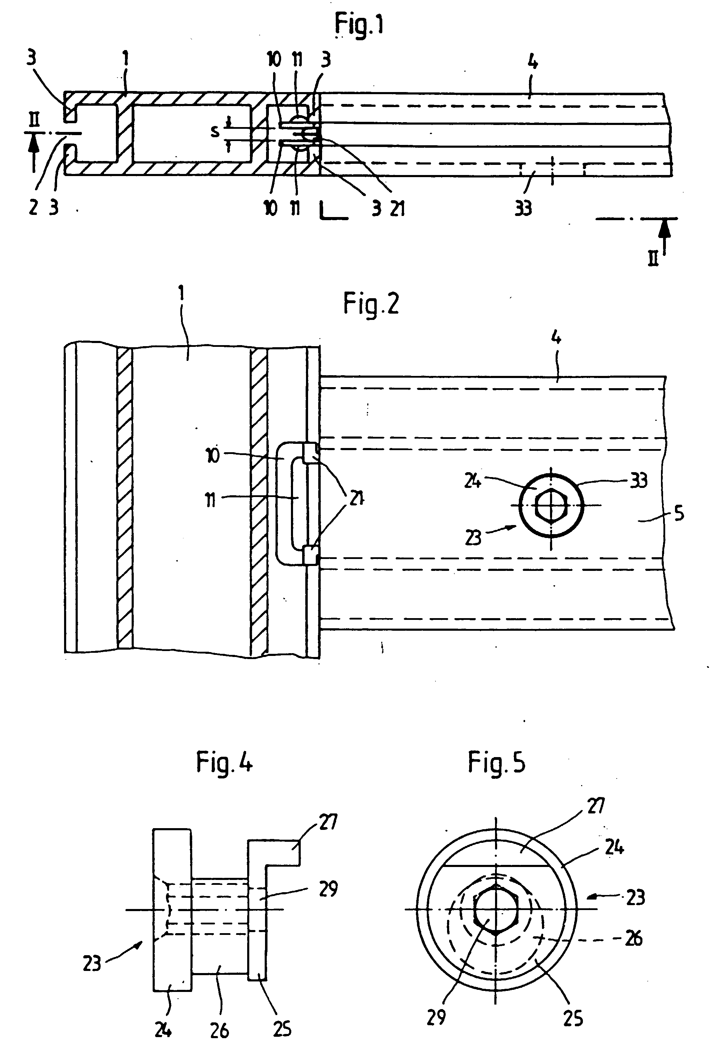

Das Halteglied 8 ist als gefaltete und mehrfach gekröpfte Blattfeder 9 ausgebildet. Die freien Enden 10 der Blattfeder 9 sind in Querrichtung federnd mit einem Abstand S parallel zueinander angeordnet und im Grundriß T-förmig ausgebildet. Die T-förmigen Enden 10 sind über die Breite des Gehäuses 8 verlängert und weisen auf den Außenseiten querverlaufende, wulstartige Ausformungen 11 auf. Die dem Gehäuse 8 zugewandten Seiten der Ausformungen 11 sind als senkrechte Anlageflächen 12 ausgebildet, die wie in Fig. 1 ersichtlich, an den Lippen 3 der Längsnut 2 anliegen. Die Ausformungen 11 können beispielsweise durch einfaches Prägen aus den Enden 10 der Blattfeder 9 ausgebildet werden.

Die Blattfeder 9 weist darüber hinaus eine mittig angeordnete, rechteckige Aussparung 13 sowie eine runde Bohrung 14 auf, die am den freien Enden 10 entgegengesetzten Ende angeordnet ist. In die rechteckige Aussparung 13 wird vor dem Einsetzen der Blattfeder 9 in das Gehäuse 6 eine Druckfeder 15 eingesetzt.

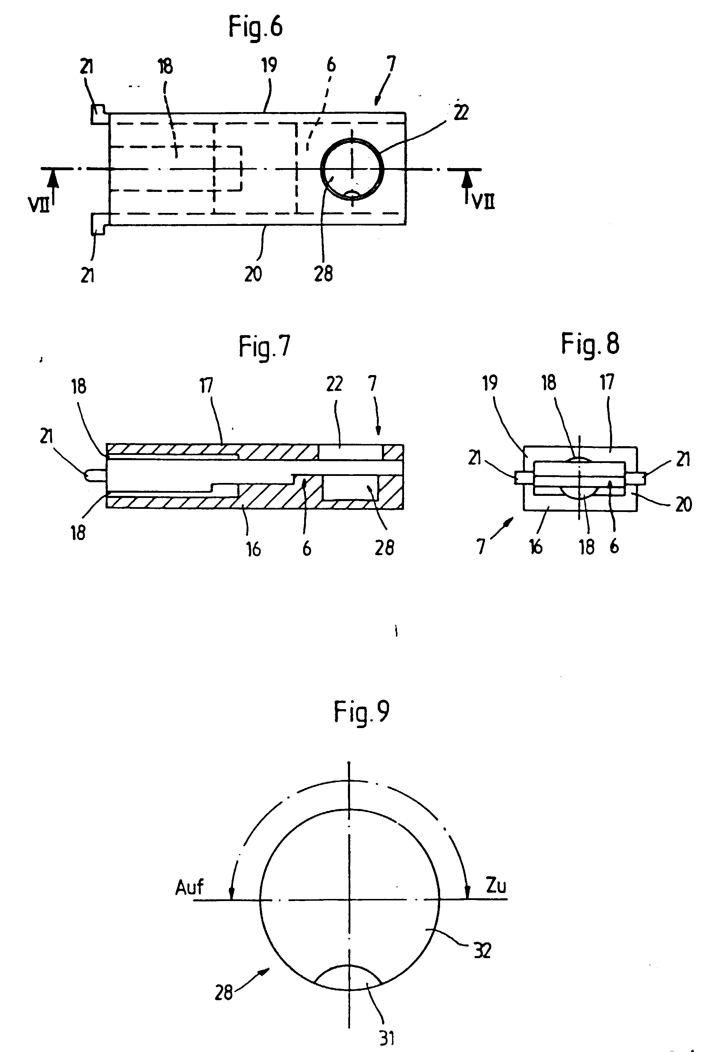

Wie aus Fig. 3 und Fig. 7 ersichtlich, ist eine Seitenwand 16 des Gehäuses 6 stufenförmig so ausgebildet, daß die mehrfach gekröpfte Blattfeder 9 glatt an dieser Seitenwand 16 anliegt. Zur Aufnahme der in die Blattfeder 9 eingesetzten Druckfeder 15 sind in Seitenwände 16 und 17 des Gehäuses 6 sacklochartig ausgebildete Führungen 18 eingeformt.

Am vorderen Ende des Gehäuses 6 sind an einem Oberteil 19 und einem Unterteil 20 Distanzhalter 21 mittig angeordnet. Die Distanzhalter sind L-förmig ausgebildet und weisen mit ihren freien Enden nach außen vom Gehäuse 6 fort. Die Breite der Distanzhalter 21 ist so bemessen, daß sie dem Abstand S zwischen den freien Enden 10 der Blattfeder 9 entspricht, so daß die Distanzhalter 21 genau zwischen den freien Enden 10 der Blattfeder 9 liegen, wenn die Blattfeder 9 vollständig in das Gehäuse 6 eingeschoben ist.

Die Seitenwand 17 des Gehäuses 6 weist eine Bohrung 22 zur Aufnahme eines Exzenters 23 auf. Der in Fig. 4 dargestellte Exzenter 23 besteht aus zwei koaxial mit Abstand voneinander angeordneten Scheiben 24 und 25, die über einen exzentrisch angeordneten, zylindrischen Teil 26 miteinander verbunden sind. Auf der Unterseite der kleineren Scheibe 25 ist ein Nocken 27 als Drehbegrenzung angeformt.

Die Bohrung 22 in der Seitenwand 17 des Gehäuses 6 und die Bohrung 14 der Blattfeder 9 sind koaxial zueinander angeordnet, wenn die Blattfeder 9 bis zum Anschlag der freien Enden 10 an das Oberteil 19 bzw. Unterteil 20 in das Gehäuse 6 eingeschoben ist.

Wie aus Fig. 7 ersichtlich, weist die Seitenwand 16 gegenüber der Bohrung 22 auf der Innenseite eine Eindrehung 28 auf. Die Bohrung 22, die Bohrung 14 sowie die Eindrehung 28 dienen zur Aufnahme des Exzenters 23. Der Exzenter 23 wird mit der kleineren Scheibe 25 voran in das Gehäuse 6 mit innenliegender Blattfeder 9 eingesetzt, wenn die Blattfeder 9 vollständig in das Gehäuse 6 eingeschoben ist. Aufgrund der Federkraft der in die Blattfeder 9 eingesetzten Druckfeder 15 ist die Blattfeder bestrebt, nach vorne aus dem Gehäuse 6 auszutreten. Sobald die Scheibe 25 durch die Bohrung 14 hindurchgetreten ist, legt sich die Seitenwand die Bohrung 14 an dem exzentrisch angeordneten Zylinder 26 des Exzenters 23 an und verhindert somit, daß der Exzenter 23 wieder aus dem Gehäuse 6 bzw. der Blattfeder 9 herausgezogen werden kann. Dieses Verklemmen des Exzenters 23 durch die Blattfeder 9 ist besonders wichtig, da in einer Bohrung 29 der Scheibe 25 eine Druckfeder 30 angeordnet ist, die den Exzenter nach außen aus dem Gehäuse 6 herausdrückt.

Der an der Scheibe 25 als Drehbegrenzung angeformte Nocken 27 dient zur Festlegung der Exzenterstellungen "auf" und "zu". An den Endpunkten des Exzenterdrehbereichs läuft der Nocken 27 auf einen Anschlag 31 in der Eindrehung 28 auf.

Um das Gehäuse 6 mit der Blattfeder 9 und dem Exzenter 23 in das Profilstück 4 einzusetzen, wird der Exzenter 23 gegen die Kraft der Druckfeder 30 in das Gehäuse 6 hineingedrückt und dann das Gehäuse 6 in das Hohlprofil 5 des Profilstücks 4 eingeschoben. Damit der Exzenter 23 vollständig in das Gehäuse 6 eingedrückt werden kann, weist die Seitenwand 16 des Gehäuses 6 die Eindrehung 28 auf, die der Aufnahme des Nockens 27 dient.

Das Gehäuse 6 wird so weit in das Hohlprofil 5 eingeschoben, bis die Scheibe 24 des Exzenters 23 durch die Kraft der Druckfeder 30 aus dem Gehäuse 6 herausgedrückt in der Öffnung 33 des Profilstücks 4 Aufnahme findet. Die Scheibe 24 des Exzenters 23 fixiert somit die Lage des Gehäuses 6 in dem Hohlprofil 5 des Profilstücks 4.

Um zwei Profilstücke 1 und 4 mittels der erfindungsgemäßen Klemmverbindung miteinander zu verbinden, werden Gehäuse 6, Blattfeder 9 und Exzenter 23 in beschriebener Weise zusammengefügt und in das Hohlprofil 5 des Profilstücks 4 eingesetzt. Anschließend wird der Exzenter 23 in die Stellung "auf" gedreht. In dieser Stellung wird die Blattfeder 9 durch die Druckfeder 15 so weit aus dem Gehäuse 6 herausgedrückt, daß die freien Enden 10 der Blattfeder 9 in Längsrichtung über die Distanzhalter 21 herausragen. Die freien Enden 10 der Blattfeder 9 sind nunmehr vor den Distanzhaltern 21 gegen die Federkraft der Blattfeder 9 zusammendrückbar. Zum Zusammenfügen des Profilstücks 4 mit einem Profilstück 1 werden nunmehr die aus dem Hohlprofil 5 des Profilstücks 4 herausragenden freien Enden 10 der Blattfeder 9 in die Längsnut 2 des Profilstücks 1 eingedrückt. Nach dem Einfügen der freien Enden 10 in die Längsnut 2 stellt sich sofort der alte Abstand S zwischen den freien Enden 10 der Blattfeder 9 wieder ein. Die an den freien Enden 10 angeformten Ausformungen 11 hintergreifen die Lippen 3 der Längsnut 2 und verhindern das Herausgleiten der freien Enden 10 aus der Längsnut 2. Somit kann nun auch eine einzelne Person ohne Probleme das Profilstück 4 mit einem weiteren Profilstück am anderen Ende des Profilstücks 4 verbinden, ohne daß die Gefahr besteht, daß sich die Verbindung zwischen Profilstück 1 und Profilstück 4 wieder löst. Trotz der bestehenden Verbindung zwischen dem Profilstück 1 und dem Profilstück 4 können die beiden Profilstücke 1,4 noch immer in Richtung der Längsnut 2 gegeneinander verschoben werden, da der Exzenter 23 noch immer auf der Stellung "auf" steht. Soll nun eine endgültige und feste Verbindung zwischen den Profilstücken 1,4 hergestellt werden, so wird der Exzenter 23 in die Stellung "zu" gedreht. Durch die Drehung des Exzenters 23 wird die Blattfeder 9 gegen die Kraft der Druckfeder 15 in das Gehäuse 6 hineingezogen. Diese Längsverschiebung bewirkt, daß die senkrechten Anlageflächen 12 an den Ausformungen 11 sich fest an die Lippen 3 anlegen und die Profilstücke 1 und 4 gegeneinander verspannen. Zum Lösen der Profilstücke 1 und 4 wird der Exzenter wieder in die Stellung "auf" gedreht, wodurch die Blattfeder 9 wieder weiter aus dem Gehäuse 6 herausragt. Durch kräftiges Ziehen laufen die Ausformungen 14 auf den Lippen 3 auf und Drücken die freien Enden 10 der Blattfeder 9 zusammen, so daß diese aus der Längsnut 2 herausgezogen werden können.

Um die Positionen auf und zu zu fixieren, befindet sich in der Eindrehung 28 in der Seitenwand 16 des Gehäuses 6 der Anschlag 31. Dieser ist beispielsweise im unteren Bereich an der Seitenwand der Eindrehung 28 ausgebildet. Der Exzenter kann nunmehr nur von einer Endposition in die andere gedreht werden, wodurch die Haltegliedpositionen exakt definiert sind.

### Bezugszeichenliste

- 1: Profilstück
- 2: Längsnut
- 3: Lippe
- 4: Profilstück
- 5: Hohlprofil
- 6: Gehäuse
- 7: Lagerglied
- 8: Halteglied
- 9: Blattfeder
- 10: Ende
- 11: Ausformung
- 12: Anlagefläche
- 13: Aussparung
- 14: Bohrung
- 15: Druckfeder
- 16: Seitenwand
- 17: Seitenwand
- 18: Führung
- 19: Oberteil
- 20: Unterteil
- 21: Distanzhalter
- 22: Bohrung
- 23: Exzenter
- 24: Scheibe
- 25: Scheibe
- 26: Zylinder
- 27: Nocken
- 28: Eindrehung
- 29: Bohrung
- 30: Druckfeder
- 31: Anschlag
- 33: Öffnung
- S: Abstand

## Patentansprüche

1. Verbindungselement zum lösbaren Verbinden zweier Profilstücke (1, 4), von denen wenigstens eines eine hinterschnittene Längsnut (2) und das andere ein rechteckiges Hohlprofil (5) aufweist, wobei das Verbindungselement ein Lagerglied (7) zum Führen eines aus wenigstens einem Blattfederelement (9) geformten Haltegliedes (8) aufweist, welches in das rechteckige Hohlprofil (5) eingesetzt ist, wobei das Halteglied (8) über einen in das Lagerglied (7) eingesetzten und von außen durch eine Öffnung (33) in dem zugehörigen Profilstück (4) drehbaren Exzenter (23), welcher axiale Bereiche unterschiedlicher Durchmesser (24, 25, 26) aufweist, in dem Hohlprofil (5) längsverschiebbar ist, wodurch die Profilstücke (1, 4) über aus dem Hohlprofil (5) herausragende und in die Längsnut (2) des anderen Profilstückes (1) eingreifende freie Enden (10) des Haltegliedes (8) miteinander verbunden bzw. voneinander gelöst werden können, wobei das Lagerglied (7) als das Halteglied (8) umschließendes Gehäuse (6) ausgebildet ist,
**dadurch gekennzeichnet,**
daß das Gehäuse (6) eine Bohrung (22) sowie das Halteglied (8) eine in Funktionsstellung zu dieser Bohrung (22) versetzt angeordnete Bohrung (14) aufweisen, und der Exzenter (23) wenigstens in einem in der Einschubrichtung in das Gehäuse (6) sowie in das Halteglied (8) durch die Bohrungen (14, 22) im vorneliegenden Bereich einen Abschnitt (25) mit einem gegenüber dem in Einschubrichtung axial dahinterliegenden Abschnitt (26) vergrößerten Durchmesser aufweist, wobei die Durchmesser der Bohrungen (14, 22) derart sind, daß der in Einschubrichtung vorneliegende Abschnitt (25) des Exzenters mit vergrößertem Durchmesser hindurchgesteckt werden kann, und wobei die Bohrungen (14, 22) zum axialen Einsetzen des Exzenters (23) koaxial zueinander ausrichtbar sind, und daß an dem Exzenter (23) im Bereich des Abschnittes mit vergrößertem Durchmesser (25) ein zusätzliches Drehbegrenzungselement (27) angeordnet ist.

2. Verbindungselement nach Anspruch 1, dadurch gekennzeichnet, daß der Exzenter (23) aus zwei koaxial mit Abstand voneinander angeordneten Scheiben (24,25) gebildet ist, die über einen exzentrisch angeordneten, zylindrischen Teil (26) miteinander verbunden sind.

3. Verbindungselement nach einem der vorhergehenden Ansprüche, dadurch gekennzeichnet, daß der Exzenter gegen die Kraft einer Feder (30) in das Gehäuse (6) hineindrückbar ist.

4. Verbindungselement nach einem der vorhergehenden Ansprüche, dadurch gekennzeichnet, daß das Halteglied (8) gegen die Kraft einer Feder (15) in das Gehäuse (6) einschiebbar ist.

5. Verbindungselement nach einem der vorhergehenden Ansprüche, dadurch gekennzeichnet, daß die Drehbegrenzung ein am Exzenter ausgebildeter Nocken (27) ist, welcher gegen einen Anschlag (31) im Gehäuse (6) aufläuft.

6. Verbindungselement nach Anspruch 5, dadurch gekennzeichnet, daß der Nocken (27) auf der Exzenterunterseite angeordnet ist.

7. Klemmverbindung mit einem Verbindungselement nach einem der vorhergehenden Ansprüche, dadurch gekennzeichnet, daß die freien Enden (10) der Blattfeder (9) im Grundriß T-förmig ausgebildet und über die Breite des Gehäuses (6) verlängert sind.

8. Klemmverbindung mit einem Verbindungselement nach einem der vorhergehenden Ansprüche, dadurch gekennzeichnet, daß am vorderen Ende des Gehäuses (6) zwischen den T-förmigen freien Enden (10) der Blattfeder (9) Distanzhalter (21) angeformt sind.

9. Klemmverbindung mit einem Verbindungselement nach einem der vorhergehenden Ansprüche, dadurch gekennzeichnet, daß die freien Enden (10) der Blattfeder (9) auf den Außenseiten querverlaufende, wulstartige Ausformungen (11) aufweisen.

10. Klemmverbindung mit einem Verbindungselement nach Anspruch 9, dadurch gekennzeichnet, daß die Ausformungen (11) auf der dem Gehäuse (6) zugewandten Seite senkrechte Anlageflächen (12) aufweisen.

## Claims

1. Connecting element for releasably connecting two profile pieces (1, 4), at least one of which has an undercut longitudinal groove (2) and the other has a rectangular hollow profile (5), the connecting element having a bearing member (7) for guiding a holding member (8) which is formed by at least one leaf-spring element (9) and is inserted into the rectangular hollow profile (5), the holding member (8) being longitudinally displaceable in the hollow profile (5) by means of an eccentric (23) which is inserted into the bearing member (7), can be rotated from the outside through an opening (33) in the corresponding profile piece (4) and has axial regions of differing diameters (24, 25, 26), as a result of which the profile pieces (1, 4) can be connected to one another or released from one another by means of free ends (10) of the holding member (8) which project out of the hollow profile (5) and engage in the longitudinal groove (2) of the other profile piece (1), the bearing member (7) being formed as a housing (6) enclosing the holding member (8), characterized in that the housing (6) has a bore (22) and the holding member (8) has a bore (14) which is arranged offset with respect to this bore (22) in the functional position, and the eccentric (23) has, at least in a front region in the insertion direction into the housing (6) and into the holding member (8) through the bores (14, 22), a section (25) having a diameter which is increased compared to the section (26) which lies axially behind it in the insertion direction, the diameters of the bores (14, 22) being such that the front section (25), in the insertion direction, of the eccentric having the increased diameter can be pressed through, and it being possible to align the bores (14, 22) coaxially with respect to one another for the purpose of axially inserting the eccentric (23), and in that an additional rotation-limiting element (27) is arranged on the eccentric (23) in the region of the section having the increased diameter (25).

2. Connecting element according to Claim 1, characterized in that the eccentric (23) is formed by two discs (24, 25) which are arranged coaxially and at a distance from one another and are connected to one another via an eccentrically arranged, cylindrical part (26).

3. Connecting element according to one of the preceding claims, characterized in that the eccentric can be pressed into the housing (6) counter to the force of a spring (30).

4. Connecting element according to one of the preceding claims, characterized in that the holding member (8) can be pushed into the housing (6) counter to the force of a spring (15).

5. Connecting element according to one of the preceding claims, characterized in that the rotation limiter is a cam (27) which is formed on the eccentric and runs onto a stop (31) in the housing (6).

6. Connecting element according to Claim 5, characterized in that the cam (27) is arranged on the underside of the eccentric.

7. Clamping connection using a connecting element according to one of the preceding claims, characterized in that the free ends (10) of the leaf spring (9) are formed with a T-shaped basic outline and are extended across the width of the housing (6).

8. Clamping connection using a connecting element according to one of the preceding claims, characterized in that spacers (21) are integrally formed on the front end of the housing (6) between the T-shaped free ends (10) of the leaf spring (9).

9. Clamping connection using a connecting element according to one of the preceding claims, characterized in that the free ends (10) of the leaf spring (9) have bead-like formations (11) which run transversely on the outer sides.

10. Clamping connection using a connecting element according to Claim 9, characterized in that the formations (11) have vertical bearing surfaces (12) on the side facing the housing (6).

## Revendications

1. Élément de connexion pour connecter de manière détachable deux pièces profilées (1, 4) dont au moins une comporte une rainure longitudinale en décrochement (2) et l'autre un profil creux rectangulaire (5), l'élément de connexion comportant un membre de logement (7) pour guider un membre de maintien (8) qui est moulé à partir d'au moins un élément formant ressort à lame (9) et qui est introduit dans le profil creux rectangulaire (5), le membre de maintien (8) pouvant coulisser longitudinalement dans le profil creux (5) par l'intermédiaire d'un excentrique (23) qui est introduit dans le membre de logement (7) et peut être tourné de l'extérieur à travers une ouverture (33) ménagée dans la pièce profilée correspondante (4) et qui comporte des zones axiales de différents diamètres (24, 25, 26), ce qui permet de solidariser et de désolidariser les pièces profilées (1, 4) par l'intermédiaire des extrémités libres (10) du membre de maintien (8) qui dépassent du profil creux (5) et pénètrent dans la rainure longitudinale (2) de l'autre pièce profilée (1), le membre de logement (7) étant conçu sous la forme d'un boîtier entourant le membre de maintien (8), caractérisé en ce que le boîtier (6) est pourvu d'un trou (22) et le membre de maintien (8) d'un trou (14) décalé par rapport au trou (22) en position de fonctionnement, et l'excentrique (23) comporte, au moins dans une zone située à l'avant par rapport à son sens d'introduction dans le boîtier (6) ainsi que dans le membre de maintien (8) à travers les trous (14, 22), une portion (25) dont le diamètre est plus grand que celui de la portion (26) située derrière elle dans le sens d'introduction, les diamètres des trous (14, 22) étant tels que la portion de plus grand diamètre (25) de l'excentrique située à l'avant dans le sens d'introduction peut y pénétrer, et les trous (14, 22) pouvant être orientés coaxialement l'un par rapport à l'autre pour introduire axialement l'excentrique (23), et en ce qu'un élément supplémentaire de limitation en rotation (27) est disposé sur l'excentrique (23) dans la zone de la portion de plus grand diamètre (25).

2. Élément de connexion selon la revendication 1, caractérisé en ce que l'excentrique (23) est formé de deux disques (24, 25) qui sont disposés coaxialement et à distance l'un de l'autre et qui sont reliés entre eux par une partie cylindrique excentrique (26).

3. Élément de connexion selon l'une des revendications précédentes, caractérisé en ce que l'excentrique peut être enfoncé dans le boîtier (6) à l'encontre de la force d'un ressort (30).

4. Élément de connexion selon l'une des revendications précédentes, caractérisé en ce que le membre de maintien (8) peut être introduit dans le boîtier (6) à l'encontre de la force d'un ressort (15).

5. Élément de connexion selon l'une des revendications précédentes, caractérisé en ce que l'élément de limitation en rotation est un talon (27) qui est situé sur l'excentrique et qui vient au contact d'une butée (31) du boîtier (6).

6. Élément de connexion selon la revendication 5, caractérisé en ce que le talon (27) se trouve sur le dessous de l'excentrique.

7. Connexion par serrage avec un élément de connexion selon l'une des revendications précédentes, caractérisée en ce que les extrémités libres (10) du ressort à lame (9) présentent, en projection horizontale, la forme d'un T et sont prolongées au-delà de la largeur du boîtier (6).

8. Connexion par serrage avec un élément de connexion selon l'une des revendications précédentes, caractérisée en ce que des ergots d'écartement (21) sont moulés à l'extrémité avant du boîtier (6) entre les extrémités libres en T (10) du ressort à lame (9).

9. Connexion par serrage avec un élément de connexion selon l'une des revendications précédentes, caractérisée en ce que les extrémités libres (10) du ressort à lame (9) comportent des parties déformées en forme de bourrelets (11) qui s'étendent transversalement aux faces extérieures.

10. Connexion par serrage avec un élément de connexion selon la revendication 9, caractérisée en ce que les parties déformées (11) comportent, sur leur face tournée vers le boîtier (6), des surfaces d'appui verticales (12).
